# EUROPEAN PATENT APPLICATION

(11) **EP 2 924 203 A1**
(43) Date of publication of application: **30.09.2015**
(21) Application number: 14004066.8
(22) Date of filing: 03.12.2014
(51) Int. Cl.: E05B 47/00, E05C 3/04, E05B 1/00, E05B 15/02, H02B 1/38, E05B 17/18

(54) **Handle for a door of an electrical cabinet and electrical cabinet**

(30) Priority: 27.03.2014 EP 14001130
(71) Applicant: ABB AG, 68309 Mannheim (DE)
(72) Inventor: Witte, Adriaan Marinus, 3436 HT Nieuwegein (NL); Van-Den-Bosch, Jules, 5216GX s'Hertogenbosch (NL)

(57) **Abstract**

A handle (1) for a door (2) of an electrical cabinet (20) or box, including a handle element (3) in the form of a flap, said handle element (3) being located on a frame-like main body (4) in such a manner that it can be pivoted, wherein the main body (4) can be attached in recesses (5) in the door (2) by means of latch means (6).

An attachment part (7) in the form of a hollow cylinder is being aligned perpendicular to the plane of the main body (4), wherein in the main body (4), in the area covered by the handle element (3) when the latter is flapped down, a hole (8) is provided for the installation of a lock (9) into the hollow cylinder (7), and wherein at the wall of the hollow-cylinder-shaped attachment part (7) a latch projection (10) is provided which acts in conjunction with a springy holding part (11) of the cabinet (20) or box to hold the door (2) in a closed position.

## Description

The invention is about a handle for a door of an electrical cabinet or box, including a handle element in the form of a flap, said handle element being located on a frame-like main body in such a manner that it can be pivoted, wherein the main body can be attached in recesses in the door by means of latch means, according to the preamble of claim 1.

A door handle, respectively lid handle, for electrical cabinets or boxes is described in DE 298 04 457 U1.

With this known door handle, a spring-loaded latch is being aligned perpendicularly to the plane of the main body and is rigidly fixed on the main body in the area of attachment of the handle element, and the latch includes a latch projection which acts in conjunction with a part of the cabinet or box to hold the door or lid in a closed position. There is a pre-punched hole foreseen, in which a lock can be inserted, if required. The lock has a bolt which in its locked position would make contact with the latch in such a way that the latch cannot be pivoted, so that the door cannot be opened in the locked position of the lock.

It is a disadvantage of the known embodiment that handle element and main body are assembled before insertion into the door, which makes the handle assembly un-easy and has an inherent risk of disrupting the assembled handle structure on fixing it to the door. It is another disadvantage with the known embodiment that once a lock is inserted and in the locked position, upon applying substantive force to the door handle in trying to pull the door open against the locking mechanism, the locking bolt may be bent aside from the latch and release the latch so that the door could be opened despite the lock being in the locked position.

It would be desirable to provide a handle of the type described above, which can be assembled to the door in an easy and robust way, and which improves the locking resistance when a lock is inserted and in the locked position.

According to the present invention, there is provided an attachment part in the form of a hollow cylinder being aligned perpendicularly to the plane of the main body, wherein in the main body, in the area covered by the handle element when the latter is flapped down, a hole is provided for the installation of a lock into the hollow cylinder, and wherein at the wall of the hollow-cylinder-shaped attachment part a latch projection is provided which acts in conjunction with a springy holding part of the cabinet or box to hold the door in a closed position.

The hollow cylinder gives stability and robustness to the handle design and lowers the risk of disrupting it during the process of attaching it to the door. Furthermore, as a lock, if required, will be inserted into the hollow-cylinder-shaped attachment part, the lock will be well protected by the stiff mechanics of a hollow cylinder against bending it sideways away when a substantive force will be applied to the door handle in an attempt to pull the door open despite of being locked. So with the present invention it is achieved that a door handle can be assembled to the door in an easy and robust way, and that the locking resistance is improved when a lock is inserted and in the locked position.

It is of advantage for an embodiment of a door handle according to the invention that a springy latch tongue is provided at the wall of the hollow-cylinder-shaped attachment part and the latch projection is provided at one end of said springy latch tongue. In one embodiment of the invention the handle element is held in recesses in wall sections of the main body by means of hinge pins. It is of advantage in a further embodiment of the invention that the recesses holding the hinge pins are open to that side of the main body which is oriented towards the door, and that the hinge pins can be fixed in the unidirectionally open recesses when the handle is mounted to the door. In this embodiment, the handle element is being attached to the main body in the moment of fixing or snapping the main body to the door. Main body and handle element are not pre-assembled, so they cannot be disrupted in the course of fixing the handle to the door. Instead, they are simple parts, made and delivered separately to the location of assembly of the door handle, and being connected together simultaneously with the connection of the main body to the door. This is so easy and robust, that the assembly of the door handle to the door need not be done in the factory with skilled personal, but can as well be done by the customer himself. The customer gets an assembly set, comprising the door, the main body, the handle element. He puts together all three, and is done. The main body when delivered does not contain any attached parts that could be disrupted by inappropriate treatment by the customer, nor does the handle element or the door itself. Only after fixing of the main body to the door, in the assembled state, there is the handle element assembled to the main body so it can be pivoted.

In one embodiment, the handle element, when flapped down, is received in a flat recess in the main body and covers the hole.

In one further, advantageous embodiment, a lock installed in the hollow-cylinder-shaped attachment part has a licking bolt which radially projects above the shell of the hollow-cylinder-shaped attachment piece when in a locked position, and in the locked position can cooperate with a fixed retaining part of the cabinet body, so that the handle is locked. The advantage is that in the locked position the locking bolt is directly held by a part of the cabinet body, which improves the resistance of the locked lock against a disruptive force trying to open the door instead of being locked.

In one further, advantageous embodiment, at the bottom side of a plate forming a middle section of the main body there are provided latch means for snap-fixing the handle to a door of an electrical cabinet.

In a further advantageous embodiment, the latch means comprise four latch plates, attached in pairs of two to each of two opposing edges of the middle portion of the main body, facing down from the middle portion plate of the main body in an approximately rectangular angle, wherein each latch plate is equipped with at least one latch nose.

In a further advantageous embodiment, a first pair of latch plates is configured as widely inflexible latch plates, and that a second pair of latch plates positioned opposite the first pair of latch plates is configured as flexible and resiliently bendable latch plates.

In one embodiment of the invention, an electrical cabinet or box, with a door, which has a door handle according to the invention, further has a finger-shaped bracket which is provided at the wall of the cabinet body or box body, whereby the free end of said bracket has the form of a latching tongue and forms a section acting as the springy holding part.

In an advantageous embodiment of the invention, the bracket is provided with a fixing shaft, which is snapped into a locating opening in the wall of the cabinet or box.

In another advantageous embodiment of the invention, the fixed retaining part of the cabinet is formed at the bracket near the root of the latching tongue.

In another advantageous embodiment of the invention, on the front side of the door there are slot-like recesses corresponding to the latch means at the main body and configured to interact with the latch means for fixing the main body to the door.

In another advantageous embodiment of the invention, the slot-like recesses are arranged in two pairs of two, provided in an appropriate position corresponding to the position of the latch plates when the main body is inserted, so that the latch plates and of the main body of the handle will snap into these slot-like recesses.

On assembly of the main body to the door, first the inflexible latch plates with their latch noses are snapped in, inserted into those two of slot-like recesses which correspond to the position of these two inflexible latch plates. Then as a second step the two flexible latch plates with their latch noses are snapped into those two of the slot-like recesses corresponding to their position.

When opening the door, the largest force is applied to the two inflexible latch plates whereas the force applied to the inflexible latch plates is minor. So the two latch plates are firm and solid and have two latch noses each to take up the force when opening. The other two latch plates are flexible and have only one latch nose each to make the final assembly of the main body to the door easy.

Further details, advantages and features of the invention can be seen in the following description of a preferred embodiment of the invention.
Figure 1 shows in an exploded view the door handle as it is connected to the door,
Figure 2 shows an isolated view of a bracket according to the invention,
Figure 3 shows a sectional view of a door handle when the door is closed to the cabinet body and the handle element is in its flapped position,
Figure 4 shows a sectional view of a door handle with an inserted lock, the door being closed to the cabinet body, the lock in its locked position and the handle element in its open position.
Figure 5a and 5b show the main body of the door handle in an isometric view, from two sides.

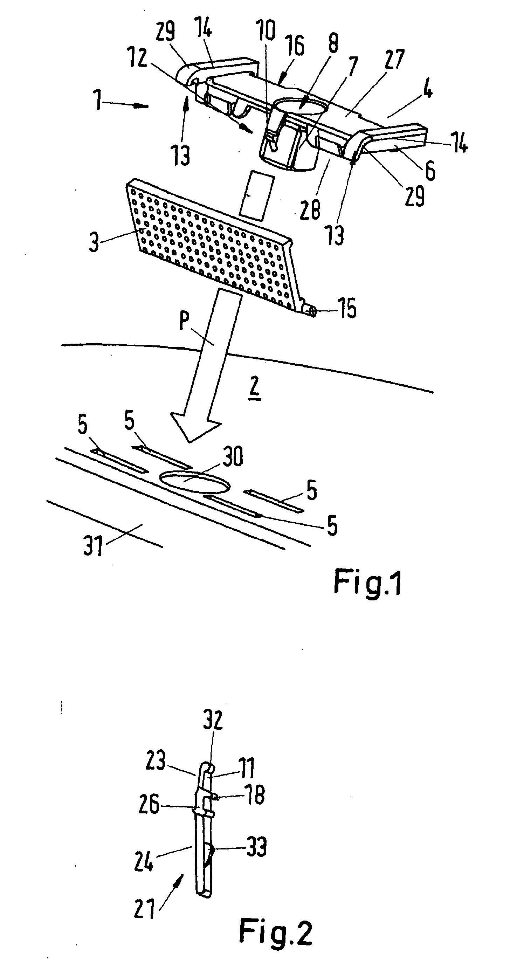

Figure 1 shows a part of a door 2 of an electrical cabinet, in an inclined top view, and the main body 4 of a door handle 1 with the handle element 3 prior to assembly. The main body 4 has an essentially rectangular shape. It has a middle portion in the form of a plate, with a top side 27 and a bottom side 28. The bottom side 28 is the one which will be in planar contact with the front side of the door 2 when the handle 1 is fixed to the door 2. The middle portion of the main body 4 is provided at each of its short sides with a bar 14, projecting above the top side 27 of the middle plate, said bars forming the wall sections 14 of the main body 4. So looking at the main body 4 as one piece, the middle section forms a flat recess, bordered by the two bars or wall sections 14.

On the end facing the long edge of the middle portion, each wall section 14 projects above the plate forming the middle section 42. The projecting sections 29 are provided at their bottom side, which is the side facing the door 2, with a unidirectional recess 13 each, being open towards the bottom side facing the door 2. Once the main body 4 is fixed to the door 2, the openings of these recesses 13 are closed by the door 2.

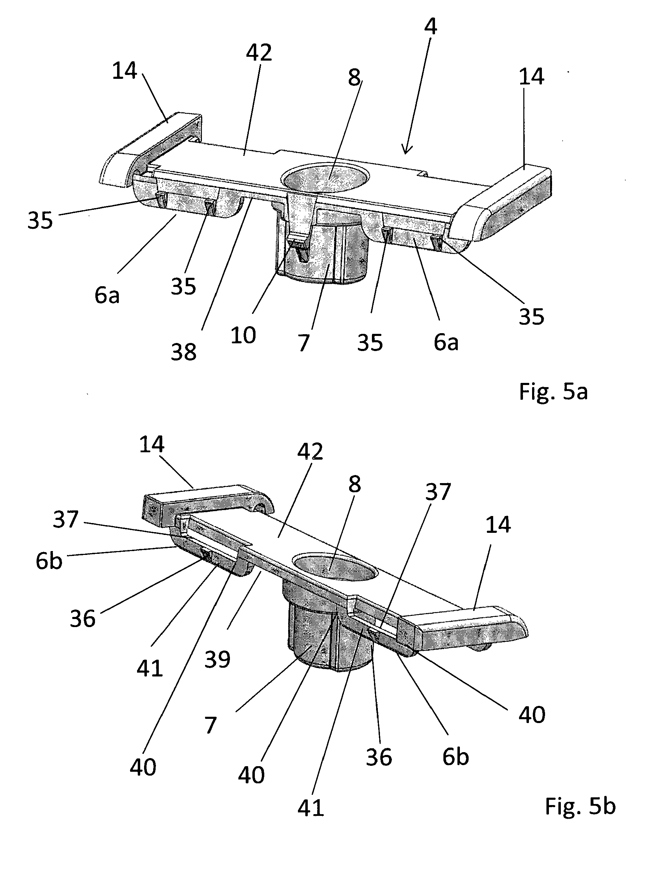

At the bottom side of the plate forming the middle section 42 of the main body 4 there are provided latch means 6. Figures 5a and 5b show the main body 4 in a detailed view, looking at the front side of the latch projection 10 in figure 5a, and looking at the backside, the side opposite to the latch projection, in figure 5b.

On the front side of the latch projection 10, see figure 5a, there are two latch plates 6a formed to the edge 38 of the middle portion 42 of the main body 4, one on the left side of the attachment part 7, one on the right side of the attachment part 7. The latch plates 6a are facing down from the middle portion plate 42 of the main body 4 in an approximately rectangular angle. Protruding out of the broad side of each latch plate 6a there are two latch noses 35 per latch plate 6a. The latch plates 6a are of a firm and solid consistence.

On the side opposite the latch projection 10, see figure 5b, there are two other latch plates 6b, formed to the edge 39 of the middle portion plate 42 of the main body 4, one to the left side and one to the right side of the attachment part 7. The other latch plates 6b are also facing down from the middle portion plate 42 of the main body 4 in an approximately rectangular angle. Protruding out of the broad side of each latch plate 6b there is one latch nose 36 per latch plate 6b. The other latch plates 6b are formed like a stretched U, being connected with two short legs 40 to the edge 39, so that a free spacing 37 is created between the middle portion plate 42 of the main body 4 and the long leg 41 of the other latch plate 6b. The latch nose 36 is formed to the long leg 41 of the other latch plate 6b. By this design and due to the short legs 40 acting like a resilient fixation for the long leg 41, the other latch plates 6b can be bent back and forth in a resilient way. This makes the latch noses 36 operate like flexible, resilient snapping hooks.

On the front side of the door, facing the bottom side of the main body 4 of the handle, there are slot-like recesses 5, arranged in two pairs of two, provided in an appropriate position corresponding to the position of the latch plates 6a, 6b when the main body 4 is inserted, so that the latch plates 6a and 6b of the main body 4 of the handle 1 will snap into these slot-like recesses 5. The slot-like recesses 5 function like an undercut. The latching noses 35, 36 are fixing the main body 4 to the door 2 by cooperating with the undercut formed by the slot-like recesses 5.

As described above, the latch plates 6a on the front side of the middle portion 42 of the main body 4 are inflexible, firm and solid, whereas the other latch plates 6b on the side opposite the latch projection 10 are flexible and can be bent back and forth resiliently. On assembly of the main body 4 to the door 2, first the inflexible latch plates 6a with their latch noses 35 are snapped in, inserted into those two of slot-like recesses 5 which correspond to the position of these two inflexible latch plates 6a. Then as a second step the two flexible latch plates 6b with their latch noses 36 are snapped into those two of the slot-like recesses 5 corresponding to their position.

When opening the door, the largest force is applied to the two inflexible latch plates 6a, whereas the force applied to the inflexible latch plates 6b is minor. So the two latch plates 6a a firm and solid and have two latch noses 35 each to take up the force when opening. The other two latch plates 6b are flexible and have only one latch nose 36 each to make the final assembly of the main body to the door easy.

Furthermore, at the bottom side of the plate in the middle section, there is provided an attachment part 7 in the form of a hollow cylinder. In the plate in the middle section, a hole 8 is provided giving access to the hollow center section of the hollow-cylinder-shaped attachment part 7. In the front side of the door 2, located in between the two pairs of recesses 5, there is an additional hole 30 provided, which is meant to take up the hollow-cylinder-shaped attachment part 7 when the main body 4 of the handle 1 is assembled to the door 2.

A handle element 3, in the form of a flip, shaped like a rectangular plate, is provided with two hinge pins 15, projecting beyond its small sides in extension of one long side, thereby defining in between them a pivoting axis for the handle element 3. The hinge pins 15 are designed in such a way that they fit into the unidirectionally open recesses 13 in the projecting sections 29 of the wall sections 14.

The arrow P indicates the sequence of assembly of the handle 1 to the door 2. The handle element 3 is held in such a position that the hinge pins 15 fit or snap into the recesses 13 in the projecting sections 29 of the wall sections 14 when the main body 4 is approached to the surface of the wall 2. When the main body 4 is snap-fixed to the walll2, the hinge pins are fixed between the recesses 13 and the surface of the wall 2, in such a way that the handle element 3 can be pivoted. And the hollow-cylinder-shaped attachment part 7 is taken up in the hole 30.

By this, the handle 1 can very easily and in a robust manner be assembled upon fixing it to the door 2.

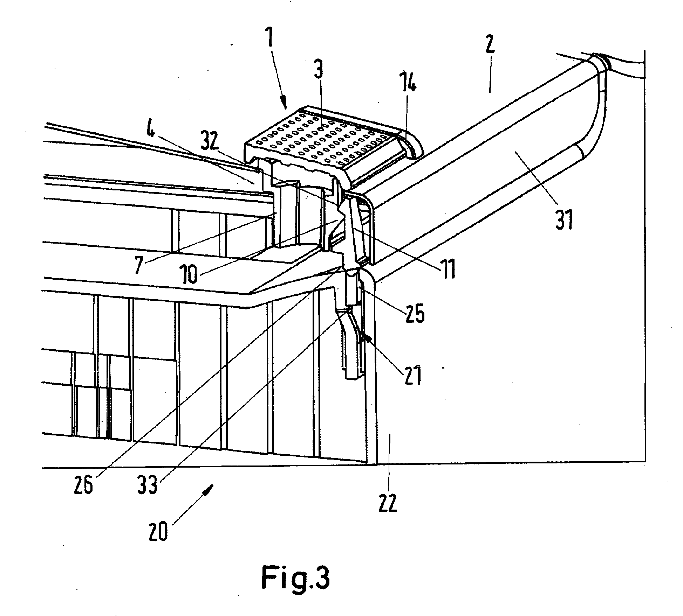

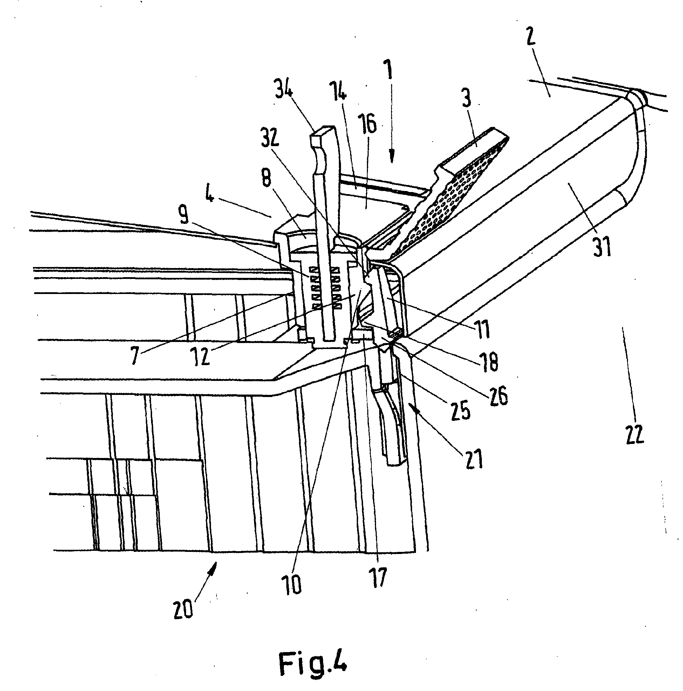

At the wall of the hollow-cylinder-shaped attachment part 7 there is provided a latch projection 10, facing outward, towards the narrow side 31 of the door 2. The latch projection 10 is wedge-shaped, with an upper wedge wall and a lower wedge wall. The attachment part 7 acts in conjunction with a springy holding part 11 see figure 3 and 4, of the cabinet 20 or box to hold the door 2 in a closed position. A springy latch tongue 12 is provided at the wall of the hollow-cylinder-shaped attachment part 7 and the latch projection 10 is provided at one end of said springy latch tongue 12. The part which actually latches with the latch projection 10 is located at the free end of the springy holding part 11. It is a latching nose 32, protruding from the springy holding part 11. It is wedge-shaped as well, and its lower wedge wall is in snapping inter-action with the upper wedge wall of the latch projection 10 at the hollow-cylinder shaped attachment part 7.

Turning now to figure 3, one can see the cabinet 20 with the door 2 closed. The handle 1 is in the closed position as well. The handle element 3 is lying in the flat recess 16 (see fig. 1) of the main body 4, so that the surface of the handle element 3 is more or less flush with the top sides of the wall sections 14 of the main body 4. The latch projection 10 at the wall of the hollow-cylinder shaped attachment part 7 is in snapping interaction with the springy holding part 11 at the front wall of the electrical cabinet 20, as is described above.

The springy holding part 11 is a section of a finger shaped bracket 21. The bracket 21 is shown as an isolated part in figure 2.

The finger-shaped bracket 21 is provided at the wall 22 of the cabinet 20 or box, whereby the free end 23 of the bracket 21 has the form of a latching tongue and forms a section acting as the springy holding part 11.

The bracket 21 is provided with a fixing shaft 24, which is snapped into a locating opening 25 in the wall 22 of the cabinet 20 or box. For this purpose, the bracket 21 has further snapping noses 33 to fit into snapping recesses in the wall of the locating opening in the wall of the cabinet.

The fixed retaining part 18 of the cabinet 20 is formed at the bracket 21 near the root 26 of the latching tongue.

Turning now to figure 4, one can see the cabinet 20 with the door 2 closed. The handle element 3 is pivoted in the open position. A lock 9 is inserted into the inner part of the hollow-cylinder shaped attachment part 7. One can see the key 34 to the lock inserted into the keyhole. The lock is in its locked position. A licking bolt 17 is radially projecting above the shell of the hollow-cylinder-shaped attachment part 7. It cooperates with the fixed retaining part 18 of the bracket 21, so that the door 2 is locked.

As the fixed retaining part 18 at the bracket 21 is located near the root 26 of the latching tongue, this section of the bracket will not deflect backwards when a force is applied to the door in its locked position trying to tear it open. In contrast to that, in case the lock is in its open position and the licking bolt 17 is deviated aside the fixed retaining part, when now a force is applied to the door tearing it in the open direction, the wedge walls of the latch projection 10 and the latching nose 32 will execute a deflecting force on the springy holding part 11, and this part 11 will bend away and give free the latch projection 10, so that the handle 1 is delatched and the door 2 can be opened.

So the bracket 21 has two functional portions for fulfilling two different functions. The first function is the releasable latching function in case there is either no lock inserted or the lock 9 is in its open position. This first function is fulfilled by the latching nose 32 at the springy holding part 11. The second function is the non-releasable holding function in case a lock 9 is inserted and the lock is in its locking position. This second function is achieved by the fixed retaining part 18.

A handle 1 and an electrical cabinet 20 as described here are very easy and robust to assemble. They come as an assembly kit with few robust parts: cabinet 20, door 2, main body 4, handle element 3 and bracket 21, optionally as well a lock 9. Assembly can be made by the customer, by just click-fitting together the parts, no special skills or tools are needed, everything works just on a click-fit basis.

| | |
|---|---|
| | 31 narrow side of the door |
| List of reference signs | 32 latching nose |
| 1 handle | 33 further snapping nose |
| 2 door | 34 key |
| 3 handle element | 35 latch nose |
| 4 main body | 36 latch nose |
| 5 recess in door | 37 spacing |
| 6 latch means on main body | 38 edge |
| 6a latch plate | 39 edge |
| 6b latch plate | 40 short leg |
| 7 attachment part | 41 long leg |
| 8 hole | 42 middle section of main body |
| 9 lock | |
| 10 latch projection | |
| 11 springy holding part | |
| 12 springy latch tongue | |
| 13 recess in wall section of main body | |
| 14 wall section of main body | |
| 15 hinge pin | |
| 16 flat recess | |
| 17 licking bolt | |
| 18 fixed retaining part | |
| 20 electrical cabinet | |
| 21 bracket | |
| 22 wall of cabinet | |
| 23 free end of bracket | |
| 24 fixing shaft | |
| 25 locating opening | |
| 26 root of latching tongue at bracket | |
| 27 top side of the main body | |
| 28 bottom side of the main body | |
| 29 projecting section of the wall section | |
| 30 hole | |

## Claims

1. A handle (1) for a door (2) of an electrical cabinet (20) or box, including a handle element (3) in the form of a flap, said handle element (3) being located on a frame-like main body (4) in such a manner that it can be pivoted, wherein the main body (4) can be attached in recesses (5) in the door (2) by means of latch means (6),
**characterized in that** an attachment part (7) in the form of a hollow cylinder being aligned perpendicular to the plane of the main body (4), wherein in the main body (4), in the area covered by the handle element (3) when the latter is flapped down, a hole (8) is provided for the installation of a lock (9) into the hollow cylinder (7), and wherein at the wall of the hollow-cylinder-shaped attachment part (7) a latch projection (10) is provided which acts in conjunction with a springy holding part (11) of the cabinet (20) or box to hold the door (2) in a closed position.

2. A handle (1) according to claim 1, **characterized in that** a springy latch tongue (12) is provided at the wall of the hollow-cylinder-shaped attachment part (7) and the latch projection (10) is provided at one end of said springy latch tongue (12).

3. A handle (1) according to claim 1, **characterized in that** the handle element (3) is held in recesses (13) in wall sections (14) of the main body (4) by means of hinge pins (15).

4. A handle (1) according to claim 1, **characterized in that** the handle element (3), when flapped down, is received in a flat recess (16) in the main body (4) and covers the hole (8).

5. A handle (1) according to claim 3, **characterized in that** the recesses (13) holding the hinge pins (15) are open to that side of the main body (4) which is oriented towards the door (2), and that the hinge pins (15) can be fixed in the unidirectionally open recesses (13) when the handle (1) is mounted to the door (2).

6. A handle (1) according to claim 1, **characterized in that** a lock (9) installed in the hollow-cylinder-shaped attachment part (7) has a licking bolt (17) which radially projects above the shell of the hollow-cylinder-shaped attachment part (7) when
in a locked position, and in the locked position can cooperate with a fixed retaining part (18) of the cabinet (20), so that the handle (1) is locked.

7. A handle (1) according to one of claims 1 to 7, **characterized in that** at the bottom side of a plate forming a middle section (42) of the main body (4) there are provided latch means (6) for snap-fixing the handle (1) to a door (2) of an electrical cabinet (20).

8. A handle (1) according to claim 7, **characterized in that** the latch means (6) comprise four latch plates (6a, 6b), attached in pairs of two to each of two opposing edges (38, 39) of the middle portion (42) of the main body (4), facing down from the middle portion plate (42) of the main body (4) in an approximately rectangular angle, wherein each latch plate (6a, 6b) is equipped with at least one latch nose (35, 36).

9. A handle according to claim 8, **characterized in that** a first pair of latch plates (6a) is configured as widely inflexible latch plates (6a), and that a second pair of latch plates (6b) positioned opposite the first pair of latch plates (6a) is configured as flexible and resiliently bendable latch plates (6b).

10. An electrical cabinet (20) or box, with a door (2), which has a handle (1) according to one of the preceding claims, **characterized in that** a finger-shaped bracket (21) is provided at the wall (22) of the cabinet (20) or box, whereby the free end (23) of said bracket (21) has the form of a latching tongue and forms a section acting as the springy holding part (11).

11. An electrical cabinet (20) or box according to claim 10, **characterized in that** the bracket (21) is provided with a fixing shaft (24), which is snapped into a locating opening (25) in the wall (22) of the cabinet (20) or box.

12. An electrical cabinet (20) or box according to claim 11, **characterized in that** the fixed retaining part (18) of the cabinet (20) is formed at the bracket (21) near the root (26) of the latching tongue.

13. An electrical cabinet (20) or box according to one of claims 10 to 12, **characterized in that** on the front side of the door (2), there are slot-like recesses (5) corresponding to the latch means (6) at the main body and configured to interact with the latch means (6) for fixing the main body (4) to the door (2).

14. An electrical cabinet (20) according to claim 13, **characterized in that** the slot-like recesses (5) are arranged in two pairs of two, provided in an appropriate position corresponding to the position of the latch plates (6a, 6b) when the main body (4) is inserted, so that the latch plates (6a) and (6b) of the main body (4) of the handle (1) will snap into these slot-like recesses (5).
